# FASCICULE DE BREVET EUROPEEN

(11) **EP 2 863 093 B1**
(45) Date de publication et mention de la délivrance du brevet: **29.06.2016**
(21) Numéro de dépôt: 14199362.6
(22) Date de dépôt: 28.11.2011
(51) Int. Cl.: F16K 31/52

(54) **Robinet pour fluide sous pression et réservoir muni d'un tel robinet**
Hahn für Flüssigkeit unter Druck, und Behälter, der mit einem solchen Hahn ausgestattet ist
Valve for a pressurised fluid, and container provided with such a valve

(30) Priorité: 11.01.2011 FR 1150227
(43) Date de publication de la demande: 22.04.2015
(62) Demande divisionnaire de: 11802518.8
(73) Titulaire: L'AIR LIQUIDE, Société Anonyme pour l'Etude et l'Exploitation des Procédés Georges Claude, 75007 Paris (FR)
(72) Inventeur: De Potter, Romuald, 95150 Taverny (FR); Debry, Tristan, 35000 Rennes (FR); Liginesche, Renaud, 95220 Herblay (FR)
(74) Mandataire: De Cuenca, Emmanuel Jaime

(56) Documents cités:
- FR-A1- 2 865 263
- US-A- 3 035 605

## Description

La présente invention concerne un robinet pour fluide sous pression ainsi qu'un réservoir muni d'un tel robinet.

L'invention concerne plus particulièrement un robinet pour fluide sous pression, avec ou sans détendeur de pression intégré, comprenant un corps abritant un circuit de fluide ayant une extrémité amont destinée à être mise en relation avec une réserve de fluide sous pression et une extrémité aval destinée à être mis en relation avec un appareil utilisateur, le circuit comprenant un clapet d'isolation pour obturer sélectivement le circuit, le clapet étant commandé par un levier monté pivotant sur le corps entre une position de repos dans laquelle le clapet d'isolation est maintenu dans une position de fermeture du circuit et une position active dans laquelle le levier déplace le clapet d'isolation dans une position d'ouverture du circuit.

L'invention concerne notamment les robinets de fluide sous pression, notamment de gaz sous pression, comprenant un organe de commande manuel du type à levier pivotant.

Le document EP1421305 B1 décrit un robinet conforme au préambule de la revendication 1.

Des exemples non limitatif de tels robinets sont décrits dans les documents EP747796 ou EP1421305.

Le document US3035605 décrit un robinet à levier pivotant de commande d'une vanne dans lequel une extrémité du levier en forme de fourche vient se placer à cheval sur un raccord de remplissage/soutirage pour permettre à un écrou fixé ensuite sur le raccord de bloquer le levier en position fermée.

Le document FR2865263A1 décrit un robinet muni d'un étrier en U pivotant autour d'une coiffe mobile déposée autour du robinet. Le mouvement de l'étrier est autorisé selon la position de la coiffe pour commander une vanne du robinet.

Les inventeurs s'efforcent d'améliorer sans cesse les solutions techniques pour les utilisateurs de robinets de fluide sous pression

En particulier, il est souhaitable de disposer de robinets de fluide sous pression qui conservent ou augmentent le nombre de fonctions sans augmenter le volume ou leur encombrement (et de préférence en diminuant leur encombrement ou leur volume). En effet, idéalement, les robinets doivent pouvoir s'adapter à des tailles et forme de chapeaux de protection différents.

En outre, l'augmentation de la solidité ou et de la sécurité de tels dispositif est toujours souhaitable.

Un but de la présente invention est de d'améliorer au moins une partie certaines des caractéristiques des robinets de fluide sous pression. Ce but est atteint conformément à la revendication 1.

Selon une possibilité, lorsque le levier est dans l'une au moins des positions parmi : la position active, la position de repos ou une position intermédiaire entre ces deux positions, l'ouverture accueille en son sein une portion du corps du robinet et/ou une portion d'un organe fonctionnel monté sur le corps du robinet.

L'invention permet ainsi d'améliorer la compacité du robinet et, le cas échéant, assure une protection supplémentaire du robinet.

Selon d'autres particularités possibles :
- le robinet comporte un organe de mesure d'une grandeur physique du fluide dans le circuit, l'organe de mesure comprenant un afficheur, l'ouverture du levier ayant une forme conjuguée de l'afficheur de l'organe de mesure, lorsque le levier est dans sa position active ou une position intermédiaire entre la position active et la position de repos, au moins une partie de l'afficheur de l'organe de mesure est logé dans l'ouverture du levier, c'est-à-dire que l'afficheur est entouré au moins partiellement par le corps du levier et s'intègre dans le volume du levier,
- l'organe de mesure est un manomètre indicateur d'une pression ou d'un contenu,
- le levier comporte un ou des renforts formant des traverses entre deux extrémités de l'ouverture,
- lorsque le levier est dans l'une au moins des positions active ou de repos, au moins une portion dite « d'appui » du levier coopère en butée avec le corps du robinet de façon à limiter le déplacement du levier,
- une extrémité du levier est articulée sur le corps et au moins une portion d'appui du levier est située à proximité de l'axe d'articulation du levier,
- au moins une portion d'appui du levier est située à proximité de l'extrémité du levier qui est opposée à l'axe d'articulation,
- l'ouverture est circulaire, ovale, carrée, rectangulaire ou parallélépipédique et est située à proximité d'une extrémité du levier,
- le levier est composé d'un matériau plastique et/ou d'un matériau métallique moulé,
- le levier est composé d'un matériau métallique embouti.

L'invention concerne également un réservoir de fluide sous pression comprenant un robinet conforme à l'une quelconque des caractéristiques ci-dessus ou ci-après.

D'autres particularités et avantages apparaîtront à la lecture de la description ci-après, faite en référence aux figures dans lesquelles :
- la figure 1 représente une vue en perspective, schématique et partielle, illustrant un exemple possible de robinet de gaz sous pression selon l'invention monté dans le col d'une bouteille de fluide sous pression,
- la figure 2 représente une vue de côté et schématique d'un détail de la figure 1, illustrant la structure et le fonctionnement d'un levier pivotant pour actionner un clapet,
- la figure 3 représente une vue en perspective d'un détail d'un autre mode de réalisation possible d'un levier de robinet selon l'invention.

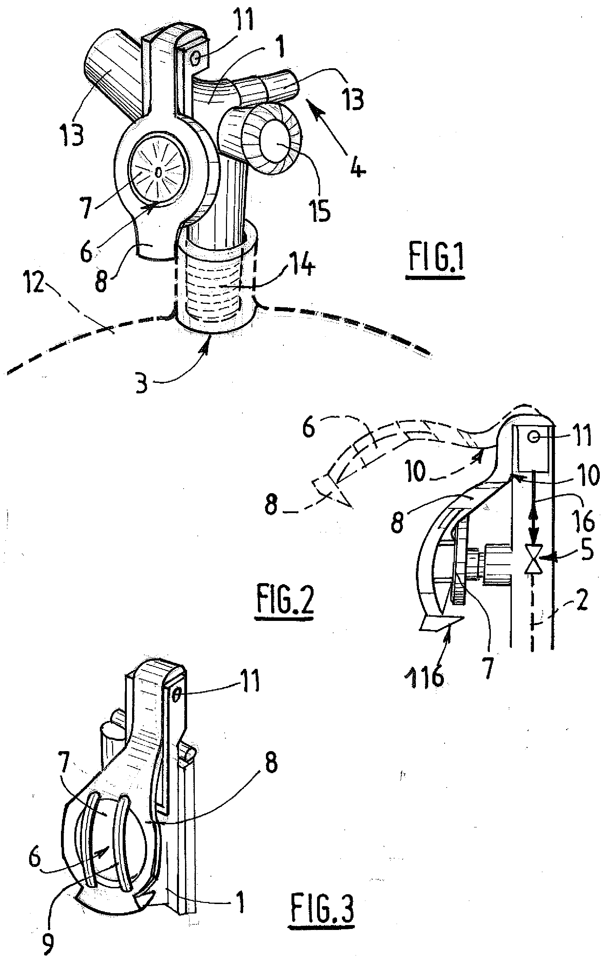

Le robinet illustré à titre d'exemple non limitatif à la figure 1 comprend un corps 1 comprenant une base 14 filetée montée dans l'orifice d'un réservoir 12 de gaz sous pression. Le corps 1 abrite un circuit 2 de soutirage de fluide ayant une extrémité 3 amont destinée à être mise en relation avec le volume de stockage d'un réservoir 12 de fluide sous pression et une extrémité 4 aval destinée à être mis en relation avec un appareil utilisateur.

L'extrémité 4 aval du circuit 2 peut déboucher dans un raccord de sortie 13 destiné à être relié à un tuyau et/ou un appareil utilisateur du gaz fourni par le robinet. Le robinet peut le cas échéant comporter un raccord 13 de remplissage distinct muni d'un clapet (non représenté) permettant d'injecter du gaz dans le réservoir 12 via un circuit interne au robinet (distinct ou en partie commun au circuit 2 de soutirage).

Classiquement, le circuit 2 de soutirage peut comporter des organes de contrôle tel qu'un détendeur de pression, un clapet de pression résiduelle, ...

Le circuit 2 de soutirage comporte en particulier un clapet 5 d'isolation (cf. schématiquement à la figure 2) permettant d'interrompre sélectivement le passage du gaz. Dans le cas où le robinet intègre un détendeur de pression, le clapet 5 peut être disposé en amont ou en aval du détendeur.

Le robinet comporte également un manomètre 7 mesurant la pression dans le circuit 2 de soutirage, par exemple en amont du clapet 5.

Le robinet peut comporter également une molette 15 pour commander manuellement le débit et/ou la pression délivrée par le robinet.

Le clapet 5 est commandé par un levier 8 monté pivotant sur le corps 1 du robinet entre une position de repos dans laquelle le clapet 5 d'isolation est maintenu dans une position de fermeture du circuit 2 (traits plein aux figures 1 et 2) et une position active dans laquelle le levier 8 déplace le clapet 5 d'isolation dans une position d'ouverture du circuit 2 (cf. traits pointillés à la figure 2).

Par exemple, la rotation du levier 8 actionne sélectivement un organe 16 pousse-clapet.

Par exemple, dans sa position de repos, le levier 8 est positionné contre ou le long du corps du robinet 1, de préférence dans une position stable.

Dans sa position active (de préférence stable), le levier 8 est par exemple décalé d'un angle non nul par rapport à la position de repos.

Dans cet exemple non limitatif, le levier 8 est articulé (axe 11) au niveau d'une de ses extrémités et, en position de repos, l'extrémité libre du levier 8 est orientée vers la base 14 du robinet. Bien entendu, cette configuration n'est nullement limitative. Par exemple, il est possible d'envisager une position de repos avec le levier 8 orienté à l'opposé de la base (vers le haut), ou selon toute direction (vers le côté) et tout angle déterminé approprié. De même pour la position active qui peut être définie selon toute autre orientation et angle relativement au corps 1.

Selon une particularité avantageuse, levier 8 comprend au moins une ouverture 6 et, lorsque le levier 8 est dans sa position de repos, l'ouverture 6 accueille en son sein au moins une partie du manomètre 7.

C'est-à-dire que le manomètre 7 (au moins une partie de son afficheur) vient s'inscrire dans le volume du levier 8.

Cette configuration permet d'augmenter la compacité de l'ensemble. De plus, le levier 8 assure ainsi une protection supplémentaire du manomètre 7 mais aussi de l'utilisateur du robinet. En position autour du manomètre 7, le levier 8 forme un cadre de protection supplémentaire pour le manomètre 7 le protégeant des chocs directs ou indirects, sans nécessiter de pièces supplémentaires. De plus, ce cadre formé par le levier 8 forme également un cerclage de maintien du manomètre en cas de défaillance de ce dernier (en cas par exemple de risque d'éjection du manomètre 7 soumis à la haute pression).

Ceci permet d'augmenter la fiabilité et de durée de vie de l'ensemble.

Bien entendu, l'invention n'est pas limitée à cet exemple de réalisation.

Ainsi, il est possible d'envisager une configuration alternative ou cumulative dans laquelle, lorsque le levier 8 est dans sa position active, l'ouverture 6 accueille en son sein une autre portion du corps 1 du robinet et/ou un organe fonctionnel monté sur le corps 1 du robinet.

De même, à titre alternatif ou cumulatif, il est possible d'envisager une configuration dans laquelle lors d'une position intermédiaire du levier 8 (lorsqu'il est déplacé entre ses positions de repos et active), l'ouverture 6 passe autour d'au moins une portion du corps 1 du robinet et/ou d'un organe fonctionnel monté sur le corps 1 du robinet.

Ceci permet d'augmenter la compacité de l'ensemble.

Dans l'exemple décrit, l'ouverture 6 est circulaire et conjuguée de la forme circulaire du manomètre 7. Bien entendu, la forme et/ou l'orientation de l'ouverture 6 peuvent être différentes et complémentaires de toute autre forme de tout autre organe du robinet (débitmètre, organe sélecteur à flotteur, capteur de température...).

De même, l'ouverture 6 peut être réalisée par une découpe et/ou un ou des pliages ou courbures du levier 8.

Ainsi l'ouverture 6 peut être délimitée par un contour fermé comme illustré aux figures. Bien entendu, en variante l'ouverture 6 peut être délimitée par un contour ouvert, c'est-à-dire par exemple par un cintrage de matière qui ne se referme pas sur lui-même (par exemple à la manière de la boucle d'un point d'interrogation).

Comme représenté à la figure 2, lorsque le levier 8 est dans sa position de repos, au moins une portion 10 dite « d'appui » du levier 8 coopère en butée avec le corps 1 du robinet de façon à limiter le déplacement du levier 8 vers le corps 1.

La portion 10 d'appui du levier 8 est par exemple située à proximité de l'axe 11 d'articulation du levier 6. Bien entendu, une portion d'appui similaire pourrait être prévue au niveau de l'extrémité libre du levier ou dans sa partie médiane. Ceci permet de renforcer encore la tenue de l'ensemble car l'appui peut le cas échéant limiter la déformation du levier 8 en cas de chocs plus importants.

Dans la variante de la figure 3, le levier 8 comporte un ou des renforts 9 formant des traverses entre deux extrémités de l'ouverture 6. Ces renforts 9 forment une protection supplémentaire (chocs, éjections) du manomètre 7 sans trop affecter la lecture continue du cadran de manomètre 7.

Comme représenté à la figure 2, l'extrémité libre 116 du levier 8 peut comporter une forme rétrécie limitant les risques d'accrochage possible du doigt d'un l'utilisateur pendant la manipulation.

De préférence, lorsque l'ouverture 6 du robinet accueille en son sein une portion du corps du robinet et/ou une portion d'un organe fonctionnel il n'y a pas d'accrochage mécanique entre l'ouverture 6 et la portion accueillie.

On conçoit donc aisément que, tout en étant de structure simple et peu coûteuse, la structure objet de l'invention permet d'améliorer la compacité et le cas échéant la robustesse du robinet.

L'invention peut concerner également tout dispositif ou procédé alternatif comprenant toute combinaison des caractéristiques ci-dessus.

## Revendications

1. Robinet pour fluide sous pression, avec ou sans détendeur de pression intégré, comprenant un corps (1) abritant un circuit (2) de fluide ayant une extrémité (3) amont destinée à être mise en relation avec une réserve de fluide sous pression et une extrémité (4) aval destinée à être mis en relation avec un appareil utilisateur, le circuit (2) comprenant un clapet (5) d'isolation pour obturer sélectivement le circuit (2), le clapet (5) étant commandé par un levier (8) monté pivotant sur le corps (1) entre une position de repos dans laquelle le clapet (5) d'isolation est maintenu dans une position de fermeture du circuit (2) et une position active dans laquelle le levier (8) déplace le clapet (5) d'isolation dans une position d'ouverture du circuit (2), le robinet comportant un organe (7) fonctionnel monté sur le corps du robinet et constitué d'un organe (7) de mesure d'une grandeur physique du fluide dans le circuit (2), l'organe de mesure étant un manomètre (7) indicateur d'une pression ou d'un contenu, l'organe (7) de mesure comprenant un afficheur **caractérisé en ce que** le levier (8) comprend une ouverture (6) délimitée par un contour ouvert ou fermé ayant une forme circulaire conjuguée de la forme circulaire de l'afficheur de l'organe de mesure (7) et **en ce que**, lorsque le levier (8) est dans sa position de repos, le levier (8) est positionné contre ou le long du corps du robinet (1), devant l'afficheur, dans cette position de repos, l'ouverture (6) étant située devant l'afficheur pour permettre la lecture en continu de l'afficheur.

2. Robinet selon la revendication 1 **caractérisée en ce que** le levier (8) est articulé selon un axe (11) au niveau d'une de ses extrémités et, en position de repos, l'extrémité libre du levier (8) est orientée vers la base (14) du robinet.

3. Robinet selon la revendication 2 **caractérisée en ce que** dans sa position active, le levier (8) est décalé d'un angle non nul par rapport à la position de repos.

4. Robinet selon l'une quelconque des revendications 1 à 3 **caractérisé en ce que** dans sa position de repos, au moins une portion (10) dite « d'appui » du levier (8) coopère en butée avec le corps (1) du robinet de façon à limiter le déplacement du levier (8) vers le corps (1).

5. Robinet selon l'une quelconque des revendications 1 à 4, **caractérisé en ce que**, lorsque le levier (8) est dans la position active , au moins une portion (10, 116) dite « d'appui » du levier (8) coopère en butée avec le corps (1) du robinet de façon à limiter le déplacement du levier (8).

6. Robinet selon la revendication 2 ou 3, **caractérisé en ce qu'**une extrémité du levier (8) est articulée sur le corps (1) et **en ce qu'**au moins une portion (10) d'appui du levier (8) est située à proximité de l'axe (11) d'articulation du levier.

7. Robinet selon l'une quelconque des revendications 2 à 6, **caractérisé en ce qu'**au moins une portion (116) d'appui du levier (8) est située à proximité de l'extrémité du levier (8) qui est opposée à l'axe (11) d'articulation.

8. Robinet selon l'une quelconque des revendications 1 à 7, **caractérisé en ce que** l'ouverture (6) circulaire, est située à proximité d'une extrémité du levier (8).

9. Robinet selon l'une quelconque des revendications 1 à 8, **caractérisé en ce que** le levier (8) est composé d'un matériau plastique et/ou de matériau métallique moulé.

10. Robinet selon l'une quelconque des revendications 1 à 9, **caractérisé en ce que** le levier (8) est composé d'un matériau métallique embouti.

11. Robinet selon la revendication 1 ou 10, **caractérisé en ce que** le levier (8) comporte un ou des renforts (9) formant des traverses entre deux extrémités de l'ouverture (6).

12. Réservoir de fluide sous pression comprenant un robinet, **caractérisé en ce que** robinet est conforme à l'une quelconque des revendications 1 à 11.

## Patentansprüche

1. Schließhahn für unter Druck stehendes Fluid, mit oder ohne integriertes Druckminderungsventil, umfassend einen Körper (1), der einen Fluidkreislauf (2) aufnimmt, der ein stromaufwärts befindliches Ende (3) hat, das dazu bestimmt ist, mit einem Speicher für unter Druck stehendes Fluid in Verbindung gebracht zu werden, und ein stromabwärts befindliches Ende (4) hat, das dazu bestimmt ist, mit einem Benutzergerät in Verbindung gebracht zu werden, wobei der Kreislauf (2) ein Absperrventil (5) umfasst, um selektiv den Kreislauf (2) zu verschließen, wobei das Ventil (5) durch einen Hebel (8) betätigt wird, der an dem Körper (1) drehbar gelagert ist zwischen einer Ruhestellung, in der das Absperrventil (5) in einer Stellung zum Schließen des Kreislaufs (2) gehalten wird, und einer aktiven Stellung, in der der Hebel (8) das Absperrventil (5) in eine Stellung zum Öffnen des Kreislaufs (2) bewegt, wobei der Schließhahn ein Funktionsorgan (7) aufnimmt, das an dem Körper des Schließhahns gelagert ist und von einem Organ (7) zum Messen einer physikalischen Größe des Fluids in dem Kreislauf (2) gebildet ist, wobei das Messorgan ein Manometer (7) zum Anzeigen eines Drucks oder eines Inhalts ist, wobei das Messorgan (7) ein Anzeigeelement umfasst, **dadurch gekennzeichnet, dass** der Hebel (8) eine Öffnung (6) umfasst, die durch einen offenen oder geschlossenen Rand begrenzt wird, der kreisförmig ist und an das kreisförmige Anzeigeelement des Messorgans (7) angepasst ist, und dadurch, dass, wenn der Hebel (8) in seiner Ruhestellung ist, der Hebel (8) gegen den oder entlang dem Körper des Schließhahns (1), vor dem Anzeigeelement, angeordnet ist, wobei in dieser Ruhestellung die Öffnung (6) vor dem Anzeigeelement angeordnet ist, um das ununterbrochene Ablesen des Anzeigeelements zu ermöglichen.

2. Schließhahn nach Anspruch 1, **dadurch gekennzeichnet, dass** der Hebel (8) an einer Achse (11) im Bereich eines seiner Enden angelenkt ist und das freie Ende des Hebels (8) in Ruhestellung zur Basis (14) des Schließhahns hin ausgerichtet ist.

3. Schließhahn nach Anspruch 2, **dadurch gekennzeichnet, dass** der Hebel (8) in seiner aktiven Stellung um einen Winkel ungleich Null gegenüber der Ruhestellung versetzt ist.

4. Schließhahn nach einem der Ansprüche 1 bis 3, **dadurch gekennzeichnet, dass** in seiner Ruhestellung wenigstens ein Teil (10), der so genannte "Stützteil", des Hebels (8) mit dem Körper (1) des Schließhahns im Anschlag so zusammenwirkt, dass er die Bewegung des Hebels (8) hin zum Körper (1) begrenzt.

5. Schließhahn nach einem der Ansprüche 1 bis 4, **dadurch gekennzeichnet, dass** wenn der Hebel (8) in der aktiven Stellung ist, wenigstens ein Teil (10, 116), der so genannte "Stützteil", des Hebels (8) mit dem Körper (1) des Schließhahns im Anschlag so zusammenwirkt, dass er die Bewegung des Hebels (8) begrenzt.

6. Schließhahn nach Anspruch 2 oder 3, **dadurch gekennzeichnet, dass** ein Ende des Hebels (8) am Körper (1) angelenkt ist und dass wenigstens ein Stützteil (10) des Hebels (8) nahe der Gelenkachse (11) des Hebels befindlich ist.

7. Schließhahn nach einem der Ansprüche 2 bis 6, **dadurch gekennzeichnet, dass** wenigstens ein Stützteil (116) des Hebels (8) nahe dem Ende des Hebels (8), das der Gelenkachse (11) entgegengesetzt ist, befindlich ist.

8. Schließhahn nach einem der Ansprüche 1 bis 7, **dadurch gekennzeichnet, dass** die kreisförmige Öffnung (6) nahe einem Ende des Hebels (8) befindlich ist.

9. Schließhahn nach einem der Ansprüche 1 bis 8, **dadurch gekennzeichnet, dass** der Hebel (8) aus einem Kunststoff und/oder aus metallischem Gusswerkstoff besteht.

10. Schließhahn nach einem der Ansprüche 1 bis 9, **dadurch gekennzeichnet, dass** der Hebel (8) aus einem tiefgezogenen metallischen Werkstoff besteht.

11. Schließhahn nach Anspruch 1 oder 10, **dadurch gekennzeichnet, dass** der Hebel (8) eine oder mehrere Verstärkungen (9) aufweist, die Querstreben zwischen zwei Enden der Öffnung (6) bilden.

12. Behälter für unter Druck stehendes Fluid, der einen Schließhahn umfasst, **dadurch gekennzeichnet, dass** der Schließhahn einem der Ansprüche 1 bis 11 entspricht.

## Claims

1. Valve for pressurised fluid, with or without an incorporated pressure-reducing valve, comprising a body (1) housing a fluid circuit (2) having an upstream end (3) which is intended to be placed in communication with a supply of pressurised fluid and a downstream end (4) which is intended to be placed in communication with a device that uses said fluid, the circuit (2) comprising an isolation valve (5) for selectively closing off the circuit (2), the valve (5) being controlled by a lever (8), which is mounted so as to be able to pivot on the body (1) between a rest position in which the isolation valve (5) is held in a position for closing the circuit (2) and an active position in which the lever (8) moves the isolation valve (5) into a position for opening the circuit (2), the valve comprising a functional member (7) mounted on the body of the valve and comprised of a member (7) for measuring a physical magnitude of fluid in the circuit (2), the member for measuring being a manometer indicating a pressure or a content, the member (7) for measuring comprising a display **characterised in that** the lever (8) comprises an opening (6) delimited by a closed or open contour having a conjugated circular shape of the circular shape of the display of the member for measuring (7) and **in that**, when the lever (8) is in its rest position, the lever (8) is positioned against or along the body of the valve (1), in front of the display, in this rest position, the opening (6) located in front of the display in order to allow for continuous reading of the display.

2. Valve according to claim 1 **characterised in that** the lever (8) is articulated on an axis (11) in the region of one of the ends thereof and, in the rest position, the free end of the lever (8) is oriented towards the base (14) of the valve.

3. Valve according to claim 2 **characterised in that** in the active position thereof, the lever (8) is shifted by a non-zero angle relative to the rest position.

4. Valve according to any of claims 1 to 3 **characterised in that** in the rest position thereof, at least one portion (10), referred to as the "bearing" portion of the lever (8) interacts in abutment with the body (1) of the valve in such a way as to limit the movement of the lever (8) towards the body (1).

5. Valve according to any of claims 1 to 4, **characterised in that** when the lever (8) is in the active position, at least one portion (10,116), referred to as the "bearing" portion of the lever (8) interacts in abutment with the body (1) of the valve in such a way as to limit the movement of the lever (8).

6. Valve according to claim 2 or 3, **characterised in that** one end of the lever (8) is articulated on the body (1) and **in that** at least one bearing portion (10) of the lever (8) is located close to the axis (11) of articulation of the lever.

7. Valve according to any of claims 2 to 6, **characterised in that** at least one bearing portion (116) of the lever (8) is located close to the end of the lever (8) that is opposite the axis (11) of articulation.

8. Valve according to any of claims 1 to 7, **characterised in that** the circular opening (6) is located close to one end of the lever (8).

9. Valve according to any of claims 1 to 8, **characterised in that** the lever (8) is made of a plastics material and/or of moulded metal material.

10. Valve according to any of claims 1 to 9, **characterised in that** the lever (8) is made of pressed metal material.

11. Valve according to any of claims 1 to 10, **characterised in that** the lever (8) comprises one or more reinforcements (9) forming cross members between two ends of the opening (6).

12. Tank of pressurised fluid comprising a valve, **characterised in that** the valve is according to any of claims 1 to 11.
